# EUROPEAN PATENT APPLICATION

(11) **EP 1 396 620 A1**
(43) Date of publication of application: **10.03.2004**
(21) Application number: 02769562.6
(22) Date of filing: 10.05.2002
(51) Int. Cl.: F02B 39/00, F02B 37/12, F01D 17/16, C22C 38/00, C22C 38/58

(54) **EXHAUST GUIDE ASSEMBLY FOR VGS TYPE TURBO CHARGER IMPROVED IN HEAT RESISTANCE AND METHOD OF PRODUCING HEAT-RESISTING MEMBERS APPLICABLE THERETO, AND METHOD OF PRODUCING RAW MATERIAL FOR VARIABLE VANES APPLICABLE THERETO**

(30) Priority: 10.05.2001 JP 2001139675; 10.05.2001 JP 2001139708; 10.05.2001 JP 2001139866; 10.05.2001 JP 2001139904; 10.05.2001 JP 2001139945; 10.05.2001 JP 2001140030; 10.05.2001 JP 2001140116; 10.05.2001 JP 2001140452; 03.08.2001 JP 2001235676
(71) Applicant: Soghi Kogyo Co., Ltd., Haibara-gun, Shizuoka 421-0305 (JP); Ishikawajima-Harima Heavy Industries Co., Ltd., Chiyoda-ku, Tokyo 100-8182 (JP)
(72) Inventor: OHISHI, Shinjiro, Shimada-shi, Shizuoka 427-0017 (JP); TAKAHASHI, Yukio, Sodegaura-shi, Chiba 299-0261 (JP)
(74) Representative: Hague, Alison Jane
(86) International application number: PCT/JP2002/004552
(87) International publication number: WO 2002/092979

(57) **Abstract**

A novel exhaust gas guide assembly with an improved high-temperature wear resistance, oxidation resistance, high-temperature strength or the like for a VGS turbocharger is provided. According to the invention, the exhaust gas guide assembly (A) for a VGS turbocharger including adjustable blades (1), a turbine frame (2) and an adjusting mechanism (3) is characterized in that a novel heat resisting member constitute the exhaust gas guide assembly (A) to remarkably enhance high-temperature durability or the like of the exhaust gas guide assembly (A).

## Description

### TECHNICAL FIELD

The present invention relates generally to a turbocharger for use in an automobile engine or the like, and more particularly to an exhaust gas guide assembly incorporated therein and an adjustable blade that is a component thereof.

### BACKGROUND ART

A turbocharger is known as a supercharger used as means for improving the power output and the performance of an automobile engine. The turbocharger is an apparatus in which a turbine is driven by the exhaust energy of the engine to rotate a compressor with the power of the turbine, whereby the engine is supercharged to have more air fed into it than fed into it by natural suction. The turbocharger, when the engine is running at a low rotational speed, can not avoid giving a slow-moving feeling caused by the reduced flow rate of the exhaust gas and continued until the exhaust turbine runs efficiently, and necessitating a subsequent time or a so-called turbo-lag before the turbine rapidly reaches the full-running state. Furthermore, in the case of a diesel engine which runs inherently at low rotational speeds, there is a disadvantage that it is difficult to produce an effect of the turbocharger.

Therefore, a VGS turbocharger that works efficiently even when the engine is running at low rotational speeds has been developed. The turbocharger of this type is adapted to obtain a high power output when the engine is running at low rotational speeds by throttling flow of exhaust gas at a low flow rate with adjustable blades (vanes) to increase the velocity of the exhaust gas and increase work of an exhaust turbine. Especially, in a diesel engine in which the amount of NOx contained in its exhaust gas has become an issue in recent years, the VGS turbocharger is a useful turbocharger capable of improving the engine efficiency even when the engine is running at low rotational speeds.

In the VGS turbocharger, an exhaust gas guide assembly is used in a high-temperature atmosphere of exhaust gas. Therefore, for the manufacture of the assembly, raw materials having a heat-resistance, for example, heat resisting materials such as SUS, SUH, SCH, NCF superalloys and the like according to the JIS used. However, since the assembly is used under very severe conditions, its life or durability has a certain limit. Therefore, further improvement of the durability of the assembly is desired.

Furthermore, when an adjustable blade for a VGS turbocharger is manufactured, a metal material (or a shaped material having a starting form for the adjustable blade) including a blade portion and a shaft portion that are integrally formed is first formed and is suitably subjected to cutting or the like, to thereby obtain the finished adjustable blade having a desired shape and dimensions. However, it is very difficult to obtain a shaped material having a near-net shape for the adjustable blade in a conventional precision casting method or metal injection molding method, and such current techniques have not reached a stage where adjustable blades can be actually mass-produced at a stable and high level. Therefore, overcoming of the above problem is desired for the purpose of realization of mass-production of adjustable blades, as well.

Furthermore, in recent years, especially in the case of diesel cars, their exhaust gas emitted into the atmosphere is strictly regulated in view of environmental protection and the like. In the case of diesel engines that inherently run at low rotational speeds, mass-production of VGS turbochargers that can enhance the engine efficiency at low rotational speeds is earnestly desired for the purpose of reduction of NOx and particulate matter (PM), as well.

The present invention has been made in view of the above-described background. The present invention attempts to improve a high-temperature wear resistance, oxidation resistance and high-temperature hardness of a member constituting an exhaust gas guide assembly that is used for a long period of time in an exhaust gas atmosphere in a heat cycle at high temperatures of 700°C or more. Furthermore, the present invention attempts to develop a novel manufacturing approach which solves the above-described problems in the precision casting method, metal injection molding method or the like, and which is capable of actually obtaining a shaped material having a near-net shape for an adjustable blade using the precision casting method or metal injection molding method.

### DISCLOSURE OF THE INVENTION

An exhaust gas guide assembly, with an improved heat resistance, for a VGS turbocharger as defined in claim 1 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a heat resisting metal member constituting the exhaust gas guide assembly has a cleanliness level which is set to be not more than 0.1% in the area ratio of nonmetallic inclusions.

An exhaust gas guide assembly, with an improved heat resistance, for a VGS turbocharger as defined in claim 2 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a heat resisting metal member constituting the exhaust gas guide assembly has nonmetallic inclusions of which the size is set to be not greater than 10 µm, wherein the size for type A inclusions is defined as a width/length thereof in a direction perpendicular to a rolling direction and the size for type B or type C inclusions is defined as a diameter thereof.

An exhaust gas guide assembly, with an improved heat resistance, for a VGS turbocharger as defined in claim 3 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a heat resisting metal member constituting the exhaust gas guide assembly has a cleanliness level which is set to be not more than 0.1% in the area ratio of nonmetallic inclusions; and
the size of the nonmetallic inclusions is set to be not greater than 10 µm, wherein the size for type A inclusions is defined as a width/length thereof in a direction perpendicular to a rolling direction and the size for type B or type C inclusions is defined as a diameter thereof.

Here, the heat resisting metal member includes a non-Ni-containing member and Ni-Cr based member. More specifically, 9Cr-1Mo, 18Cr-5Al, SUS420J2, SUS304, SUS316, SUS310S, SCH21, SUH660, Incoloy 800H and Inconel 713C and the like can be enumerated.

The nonmetallic inclusions present in the metal includes, for example, manganese sulfide, silicon oxide, aluminum oxide and the like and, according to the invention, especially the nonmetallic inclusions such as type B and type C inclusions of torn-type or dispersed-type can be reduced.

Furthermore, the presence of the nonmetallic inclusions is preferably 0.1% (cleanliness; area ratio) or less, and more preferably, 0.05% or less, and the size of the nonmetallic inclusions is 10 µm or smaller, and more preferably, 5 µm or smaller.

An exhaust gas guide assembly, with an improved heat resistance, for a VGS turbocharger as defined in claim 4 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a heat resisting member constituting the exhaust gas guide assembly comprises an alloy containing, in addition to iron, carbon of a predetermined weight percent, other alloying elements of a predetermined weight percent and incidental impurities; and
the weight percentages of carbon and the other alloying elements are set to be not more than 0.05% for C, not less than 1% for Mn, not less than 15% for Ni, not more than 30% for Cr, and not less than 0.1% for Ti, respectively, and the other alloying elements include one or more alloying elements selected from the group consisting of Al, Ce and La, the weight percentages thereof being set to be not less than 0.1% for Al, not less than 0.05% for Ce and not less than 0.05% for La, respectively.

According to the invention, it is possible to suppress textural embrittlement of the heat resisting member caused by sensitization and σ embrittlement.

An exhaust gas guide assembly, with an improved heat resistance, for a VGS turbocharger as defined in claim 5 is characterized in that the heat resisting member according to claim 4 constituting the exhaust gas guide assembly is formed on a surface thereof with a coating of chromium carbide.

According to the invention, since carbon in a substrate moves and diffuses into a coating portion and the actually dissolved carbon is further reduced, it is possible to further suppress the textural embrittlement of the heat resisting member caused by the sensitization.

Here, the chromium carbide includes Cr₂₃C₆, Cr₇C₃, Cr₃C₂ and the like, and Cr₇C₃ is especially preferable taking into account both of coating reactivity and high-temperature chemical stability.

An exhaust gas guide assembly, with an improved heat resistance, for a VGS turbocharger as defined in claim 6 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a heat resisting member of a γ' precipitation hardening type which constitutes the exhaust gas guide assembly has a stress imparting treatment applied thereto in advance.

According to the invention, overaging embrittlement of the heat resisting member can be suppressed.

Here, the heat resisting member of the γ' precipitation hardening type is a material that precipitates compounds contributing to heat resistance, such as Ni₃Ti, Ni₃Al and the like. More specifically, SUH660, Inconel 713C and the like can be enumerated.

The stress imparting treatment is a treatment in which strains are introduced so as to serve as nuclei for generating the above-mentioned compound so that a fine grained and homogeneous compound is formed, and which is carried out prior to a precipitation heat treatment.

An exhaust gas guide assembly, with an improved heat resistance, for a VGS turbocharger as defined in claim 7 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a heat resisting member constituting the exhaust gas guide assembly comprises a martensitic stainless steel which contains at least one component selected from the group consisting of W of not less than 0.3%, V of not less than 1.0%, Mo of not less than 1.0% and Hf of not less than 0.5% by weight.

According to the invention, it is possible to increase the secondary tempering hardening temperature of a high-temperature tool steel up to 750-850°C, which is conventionally 550-650°C, so that a larger toughness can be given to the steel. The reasons are that a strong consistency with a parent phase at the initial stage of alloy carbide generation caused by separation nucleation from the parent phase and a strong blocking action against motion of dislocations based on homogeneous dispersion strengthening. When work strains are applied before secondary hardening, a higher effect can be obtained.

Furthermore, the heat resisting member of the invention may contain only one of the above four kinds of components and may contain two or three of them in combination, and furthermore, may contain all of the four kinds of components.

An exhaust gas guide assembly, with an improved heat resistance, for a VGS turbocharger as defined in claim 8 is characterized in that the heat resisting member according to claim 7 constituting the exhaust gas guide assembly is formed on a surface thereof with a coating of chromium carbide.

According to the invention, not only a toughness of the member but also a wear resistance thereof can be strengthened.

Here, the chromium carbides for a coating component include Cr₂₃C₆, Cr₇C₃, Cr₃C₂ and the like. Especially, Cr₇C₃ is preferable in terms of coating reactivity and high-temperature friction/wear resistance.

The martensitic stainless steel is a stainless steel which contains 12-18% of chromium and 0.1-1.0% of carbon and in which martensite can be obtained by quenching, and more specifically, SUS410, SUS440, SUS420J2, SUS431 and the like can be enumerated by way of example.

An exhaust gas guide assembly, with an improved heat resistance, for a VGS turbocharger as defined in claim 9 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a heat resisting member constituting the exhaust gas guide assembly comprises an alloy containing, in addition to iron, carbon of a predetermined weight percent, other alloying elements of a predetermined weight percent and incidental impurities; and
the weight percentages of carbon and the other alloying elements are set to be 0.2-0.5% for C, 5.0-10% for Mn, 10-20% for Ni, 15-25% for Cr, 0.05-0.2% for N and 0.01-0.1% for one or two alloying elements selected from the group consisting of La, Ce and Sm, respectively, to thereby increase the solubility limit of carbon at a high temperature.

According to the invention, it is possible to form a carbide coating without carrying out carburizing, to thereby manufacture the exhaust gas guide assembly having a high durability at a low cost. This is because carbon is not dissolved, that is, a state where carbon does not become carbide and freely diffuses and moves is realized by such a component composition control, so that a carbide in a single phase can be formed when the coating is formed.

Here, one or two of La, Ce and Sm mean, for example, 0.07% of La, 0.07% of La + Ce, 0.07% of Ce + Sm or the like, and 0.07% of La or 0.07% of La + Ce is preferable.

An exhaust gas guide assembly, with an improved heat resistance, for a VGS turbocharger as defined in claim 10 is characterized in that the heat resisting member according to claim 9 constituting the exhaust gas guide assembly is formed on a surface thereof with a coating of chromium carbide.

According to the invention, it is possible to improve the durability of the heat resisting member.

Here, the chromium carbides for a coating component include Cr₂₃C₆, Cr₇C₃, Cr₃C₂ and the like. Especially, Cr₇C₃ is preferable in terms of coating formability and high-temperature friction.

An exhaust gas guide assembly, with an improved heat resistance, for a VGS turbocharger as defined in claim 11 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas ;
wherein flow of the exhaust gas at a low flow rate is throttled by the adjustable blades to increase the velocity of the exhaust gas so that a high output power is obtained at low rotational speeds; and
the assembly is characterized in that:
a heat resisting member constituting the exhaust gas guide assembly comprises an alloy containing, in addition to iron, carbon of a predetermined weight percent, other alloying elements of a predetermined weight percent and incidental impurities; and
the weight percentages of carbon and the other alloying elements are set to be 0.15-0.35% for C, not more than 1.5% for Si, not more than 2.0% for Mn, not more than 0.45% for P, not more than 0.03% for S, 19.0-22.0% for Ni and 24.0-26.0% for Cr, respectively, wherein after melting and refining, followed by high-temperature slab heating, a quenching treatment after rolling/forging is carried out so that chromium carbide and cementite are dissociated and dissolved to thereby enrich carbon.

According to the invention, it is possible to manufacture the exhaust gas guide assembly having a high strength. This is because the concentration of the dissolved carbon has reached the solubility limit by the above treatments and a solid-solution strengthening action of so-called interstitial atoms is performed to the maximum.

Furthermore, since the alloy steel in the invention is made of an SUS310S steel according to the JIS having a certain amount of carbon added thereto, it is inherently possible to apply such processes as rolling, forging and the like. Due to the dissociation and solution treatment, applying of these processes becomes easier. Furthermore, when applying a coating of chromium carbide in order to provide a high-temperature durability, a carburizing treatment that is absolutely necessary for SUS310S can be eliminated, and therefore, it is excellent in economic feasibility.

An exhaust gas guide assembly, with an improved heat resistance, for a VGS turbocharger as defined in claim 12 is characterized in that the heat resisting member according to claim 11 constituting the exhaust gas guide assembly is formed on a surface thereof with a coating of chromium carbide, titanium carbide, tungsten carbide or the like without carrying out a carburization treatment which is essential for a non-casting type heat resisting steel.

According to the invention, it is possible to improve the high-temperature wear resistance of the heat resisting member.

Here, the chromium carbides for a coating component include Cr₂₃C₆, Cr₇C₃, Cr₃C₂ and the like. Especially, Cr₇C₃ is preferable in terms of coating formability and high-temperature wear properties.

An exhaust gas guide assembly, with an improved heat resistance, for a VGS turbocharger as defined in claim 13 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a superalloy is applied to a heat resisting member constituting the exhaust gas guide assembly.

An exhaust gas guide assembly, with an improved heat resistance, for a VGS turbocharger as defined in claim 14 is characterized in that the heat resisting member according to claim 13 constituting the exhaust gas guide assembly is formed on a surface thereof with a coating of chromium carbide, titanium carbide, tungsten carbide, vanadium carbide, niobium carbide or molybdenum carbide.

Here, the chromium carbides for a coating component include Cr₂₃C₆, Cr₇C₃, Cr₃C₂ and the like. Especially, Cr₇C₃ is preferable in terms of coating formability and high-temperature wear properties. The titanium carbides include TiC, Ti₂C and the like, and TiC is especially preferable in terms of the coating formability and the high-temperature wear properties. The tungsten carbides include WC, W₂C and the like, and WC or the like is especially preferable in terms of the coating formability and the high-temperature wear properties. The molybdenum carbides includes MoC, Mo₂C and the like, and MoC is especially preferable in terms of the coating formability and the high-temperature wear properties. Furthermore, regarding the vanadium carbide and the niobium carbide, VC and NbC are preferable, respectively.

Furthermore, the superalloy is a heat resisting alloy used at 700-1050°C, and more specifically, Incoloy 800H, Incoloy 825, Inconel 713C, IN-100, MAR-M 246, Hasteloy S and the like can be listed.

An exhaust gas guide assembly, with an improved durability, for a VGS turbocharger as defined in claim 15 comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds; and
the assembly is characterized in that:
a heat resisting member constituting the exhaust gas guide assembly comprises an alloy containing, in addition to iron, carbon of a predetermined weight percent and other alloying elements of a predetermined weight percent; and
the weight percentages of carbon and the other alloying elements are set to be 0.2-0.5% for C, 15-30% for Cr, 15-30% for Ni, 0.01-0.1% for Pb, 0.01-0.1% for Se, 0.01-0.1% for Te, 0.02-0.1% for O and 0.005-0.05% for S, respectively, to thereby contain a comparatively large amount of chromium and nickel.

According to the invention, it is possible to manufacture an adjustable blade or the like excellent in heat resistance using a precision casting process or a metal injection molding process.

Here, the precision casting method refers to a casting method for castings which require a high accuracy in dimension, such as a lost-wax process, shell-mold process, investment casting process, CADIC process or the like. Among these, the lost-wax casting process is useful as a method for producing castings having the most complicated shapes with the highest accuracy.

The metal injection molding process (MIM) is a method in which metal powder is given plasticity by kneading it with a suitable binder, and is injected into a mold and solidified, and thereafter, the binder is removed from it and it is sintered. The method is characterized in that it can be used to mass-produce products having a complicated three-dimensional shape.

A method for manufacturing a heat resisting member applicable to an exhaust gas guide assembly for a VGS turbocharger as defined in claim 16, which assembly comprises:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
an adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds, is characterized in that:
the method comprises the steps of subjecting a material selected from the group consisting of high-alloy austenitic heat resisting stainless steel, iron based superalloy and nickel based superalloy to ion carburizing, and subsequently, carrying out a TD salt bath treatment.

According to the invention, the high-temperature hardness of the material surface is secured by the ion carburizing and the TD salt bath treatment so that a heat resisting member having a high-durability is obtained.

The method for manufacturing a heat resisting member applicable to an exhaust gas guide assembly for a VGS turbocharger as defined in claim 17 is characterized in that, in addition to the features according to claim 16, in a case where the high-alloy austenitic heat resisting stainless steel is selected as the material, an amount of carbon contained in the material is set to be the lower limit within the specifications and one or more of Ti, Nb, B, Hf and Zr are contained in the material.

The method for manufacturing a heat resisting member applicable to an exhaust gas guide assembly for a VGS turbocharger as defined in claim 18 is characterized in that, in addition to the features according to claim 16, in a case where the iron based superalloy is selected as the material, one or more of Ti, Nb, B, Hf and Zr are contained in the material.

The method for manufacturing a heat resisting member applicable to an exhaust gas guide assembly for a VGS turbocharger as defined in claim 19 is characterized in that, in addition to the features according to claim 16, in a case where the iron based superalloy is selected as the material, one or more of Ti, Nb, B, Hf and Zr are contained in the material.

The method for manufacturing a heat resisting member applicable to an exhaust gas guide assembly for a VGS turbocharger as defined in claim 20 is characterized in that, in addition to the features according to claim 16, in a case where the nickel based superalloy is selected as the material, a lot of internal strains are accumulated under high stress within the allowable range, to thereby precipitate a fine-grained γ' phase while the internal strains are serving as nuclei.

A method for manufacturing a shaped material for an adjustable blade applicable to an exhaust gas guide assembly for a VGS turbocharger as defined in claim 21, the adjustable blade including a shaft portion serving as a center of rotation and a blade portion for substantially adjusting the flow rate of exhaust gas, the adjustable blade being incorporated in the VGS turbocharger,
wherein flow of the exhaust gas at a low flow rate discharged from an engine is suitably throttled to increase the velocity of the exhaust gas so that an exhaust turbine wheel is rotated by energy of the exhaust gas and a compressor directly coupled to the exhaust turbine wheel feeds more air into the engine than fed into it by natural suction, whereby a high output power is obtained at low rotational speeds, is characterized in that:
in manufacturing an adjustable blade, a step of obtaining a shaped material which is integrally provided with a blade portion and a shaft portion as a starting form for the adjustable blade is conducted by precision casting which enables the shaped material to be formed with high accuracy; and
in casting, a virgin material including a heat resisting steel or alloy as a primary parent metal is utilized, the virgin material containing, in weight percentage, 0.05-0.5% C, 0.5-1.5% Si and 0.01-0.1% O, whereby fluidity of a molten metal which is poured into a mold is enhanced.

According to the invention, when the shaped material for the adjustable blade is obtained by the precision casting, the amounts of C (carbon), Si (silicon) and O (oxygen) contained in the virgin material is adjusted, so that the fluidity of the molten material to be poured into the mold is improved. Therefore, a shaped material having a higher accuracy in shape and dimensions thereof can be obtained and the deviation of the shaped materials can be suppressed within a smaller range.

The method for manufacturing a shaped material for an adjustable blade applicable to an exhaust gas guide assembly for a VGS turbocharger as defined in claim 22 is characterized in that, in addition to the features according to claim 21, in the casting, one of the mold and the shaped material or both are cooled so that the period of time between pouring of the molten metal into the mold and breaking the mold is shortened, resulting in a solidification structure of the shaped material being fine-grained.

According to the invention, a shaped material having fine crystalline grains can be obtained. Therefore, for example, when a rolling process is applied to the shaft portion of the shaped material later, sharp edges can be made hardly to occur on the portion, and a shaped material and an adjustable blade as a finished product which have a higher accuracy in shape and dimensions thereof can be realized.

The method for manufacturing a shaped material for an adjustable blade applicable to an exhaust gas guide assembly for a VGS turbocharger as defined in claim 23 is characterized in that, in addition to the features according to claim 21 or 22, in the casting, one or more of Pb, Se and Te are added to the molten metal to be poured into the mold, and somewhat large quantities of O and S are contained in the molten metal unless the presence of nonmetallic inclusions will cause a problem.

According to the invention, rolling formability, machinability (machining referred to herein mainly means grinding performed in a later process) and the like of the shaped material can be improved by properly adding Pb (lead), Se (selenium), Te (tellurium) and the like. Furthermore, fluidity of the molten metal in the casting process can be improved by intentionally adding nonmetallic inclusions such as O (oxygen), S (sulfur) and the like of which the less content is generally considered as being preferable for a steel product.

The method for manufacturing a shaped material for an adjustable blade applicable to an exhaust gas guide assembly for a VGS turbocharger as defined in claim 24 is characterized in that, in addition to the features according to claim 21, 22 or 23, in the casting, the temperature of the molten metal to be poured into the mold is elevated to a temperature higher than the melting point thereof so that the molten metal is poured into the mold in a state where the viscosity of the molten metal is lower than that at the melting point.

According to the invention, the molten metal to be poured into the mold is heated to a temperature above the melting point thereof so that the molten metal is poured into the mold in a state the viscosity thereof is lowered, resulting in the fluidity of the molten metal being further improved. The viscosity of the molten metal has a high temperature-dependence around the melting point thereof and the viscosity becomes lower as the temperature becomes higher. However, the temperature-dependence is lowered in the high-temperature region, for example, about 30°C or more above the melting point and no remarkable lowering of the viscosity occurs by heating more. Therefore, in the embodiment, considering the effect of the lowering of the viscosity and the cost for heating, casting is carried out in a state where the molten metal is heated to a temperature about 30°C higher than the melting point thereof by way of example.

A method for manufacturing a shaped material for an adjustable blade applicable to an exhaust gas guide assembly for a VGS turbocharger as defined in claim 25, the adjustable blade including a shaft portion serving as a center of rotation and a blade portion for substantially adjusting the flow rate of exhaust gas, the adjustable blade being incorporated in the VGS turbocharger,
wherein flow of the exhaust gas at a low flow rate discharged from an engine is suitably throttled to increase the velocity of the exhaust gas so that an exhaust turbine is rotated by energy of the exhaust gas and a compressor directly coupled to the exhaust turbine wheel feeds more air into the engine than fed into it by natural suction, whereby a high output power is obtained at low rotational speeds, is characterized in that:
in manufacturing an adjustable blade, a step of obtaining a shaped material including a blade portion and a shaft portion as a starting form for the adjustable blade is conducted by metal injection molding in which a metal powder having plasticity imparted thereto is injected into a mold and solidified;
in the injection molding, sintering is carried out so as to uniformly form minute closed cells which are spheroidal pores between metal grains; and
thereafter, the shaped material thus injection molded is subjected to a hot isostatic press treatment (HIP treatment) so as to increase the density of the shaped material.

According to the invention, the porosity of the metal material obtained by the metal injection molding can be reduced, so that and the strength of the shaped material can be increased. That is, the high porosity that is considered to be one of the disadvantages of the metal injection molding can be improved and the shaped material formed by the injection molding is made applicable practically. Furthermore, due to the reduction of the porosity, a dimensional accuracy can be improved and the formed shaped material having a near-net shape closer to the aimed shape of an adjustable blade can be obtained. Therefore, a margin for a rolling process or the like carried out in a later process can be reduced to a lesser one, so that simplification of the rolling process or the like can be achieved.

The method for manufacturing a shaped material for an adjustable blade applicable to an exhaust gas guide assembly for a VGS turbocharger as defined in claim 26 is characterized in that, in addition to the features according to claim 25, in the metal injection molding, particles of the metal powder which is a raw material are formed to have a spherical shape and to be fine so that fatigue characteristics of the shaped material under high temperature rotatory bending are enhanced.

According to the invention, the metal material obtained by the injection molding has enhanced fatigue characteristics under high temperature rotatory. That is, the high-temperature rotary bending fatigue that is considered generally as one of the disadvantages of the metal injection molding process can be overcome, so that a forming approach for a shaped material by injection molding can be realized.

The method for manufacturing a shaped material for an adjustable blade applicable to an exhaust gas guide assembly for a VGS turbocharger as defined in claim 27 is characterized in that, in addition to the features according to claim 25 or 26, in the metal injection molding, surfaces of particles of the metal powder which is a raw material are reduced before sintering.

According to the invention, sintering properties can be improved since oxides on the surfaces of the metal particles are removed by reducing the surfaces before sintering. Furthermore, the effect of the hot isostatic pressing can be increased, to thereby contribute significantly to a reduction of the porosity of the shaped material.

### BRIEF DESCRIPTION OF DRAWINGS

Fig. 1(a) is a perspective view showing a VGS turbocharger according to the present invention and Fig. 1(b) is an exploded perspective view showing an exhaust gas guide assembly;
Fig. 2 is a front view and a left side elevation view showing an adjustable blade that is one of constituent members of the exhaust gas guide assembly; and
Fig. 3 is a graph showing the relation between the temperature and the viscosity of an Ni-based heat resisting material and an Fe-based heat resisting material.

### BEST MODE FOR CARRYING OUT THE INVENTION

The present invention will be described hereinbelow. The present invention has been made by actively researching and developing various heat resisting materials in order to improve high-temperature durability of an exhaust gas guide assembly A for a VGS turbocharger. Therefore, the exhaust gas guide assembly constituted by such a heat resisting material will be first described. The heat resisting materials are divided into eight groups such as those in an embodiment 1 corresponding to claims 1-3, an embodiment 2 corresponding to claims 4-6, an embodiment 3 corresponding to claims 7 and 8, an embodiment 4 corresponding to claims 9 and 10, an embodiment 5 corresponding to claims 11 and 12, and embodiment 6 corresponding to claims 13 and 14, an embodiment 7 corresponding to claim 15 and an embodiment 8 corresponding to claims 16-20.

### (1) Exhaust Gas Guide Assembly

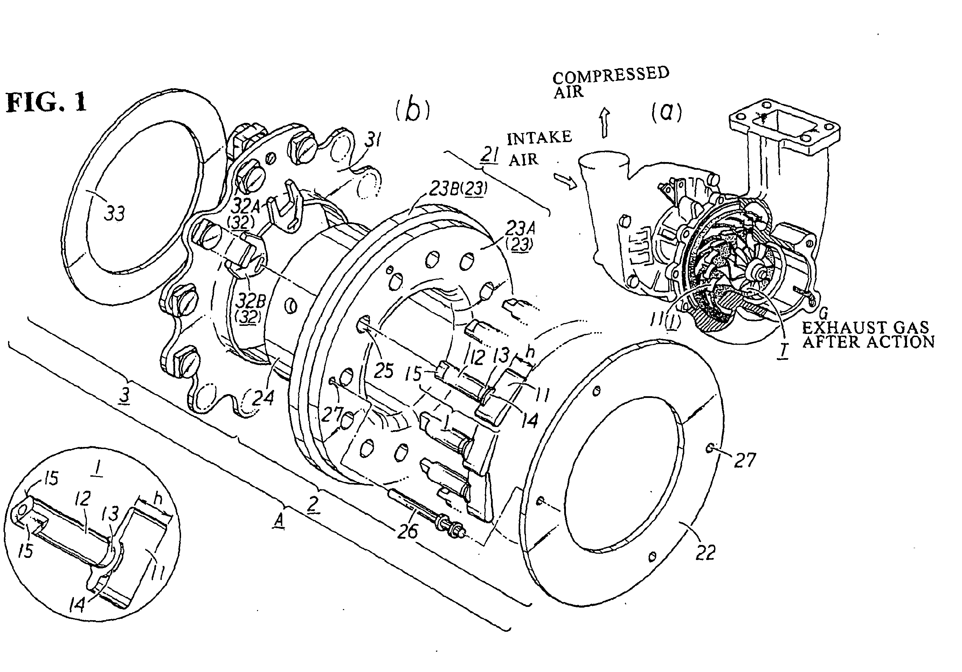

An exhaust gas guide assembly A suitably controls the flow rate of exhaust gas G by throttling the exhaust gas G as necessary while an engine is running at low rotational speeds. The exhaust gas guide assembly, as shown in Fig. 1 as an example, comprises a plurality of adjustable blades 1 for setting substantially the flow rate of the exhaust gas, provided at the outside of an outer periphery of an exhaust turbine wheel T, a turbine frame 2 for rotatably supporting the adjustable blades 1 and a blade adjusting mechanism 3 for rotating the adjustable blades 1 by a predetermined angle to set the flow rate of the exhaust gas G as necessary. Each component will be described.

First, the adjustable blade 1 will be described. As shown in Fig. 1 as an example, a plurality of adjustable blades 1 (approximately 10-15 blades for one unit of the exhaust gas guide assembly A) are arranged in an arc along the outer circumference of the exhaust turbine wheel T so that the adjustable blades 1 rotate respectively almost the same angle to suitably control the flow rate of the exhaust gas. Each adjustable blade 1 comprises a blade portion 11 and a shaft portion 12. The blade portion 11 is formed to have a certain width corresponding mainly to a width of the exhaust turbine wheel T and an airfoil shape in cross-section in a width direction such that the exhaust gas G is effectively directed to the exhaust turbine wheel T. Hereinafter, the width dimension of the blade portion 11 is referred to as "blade height h". The shaft portion 12 is formed to be continues to and integrated with the blade portion 11, so that the blade portion 11 serves as a rotation shaft for the blade portion 11 to be moved.

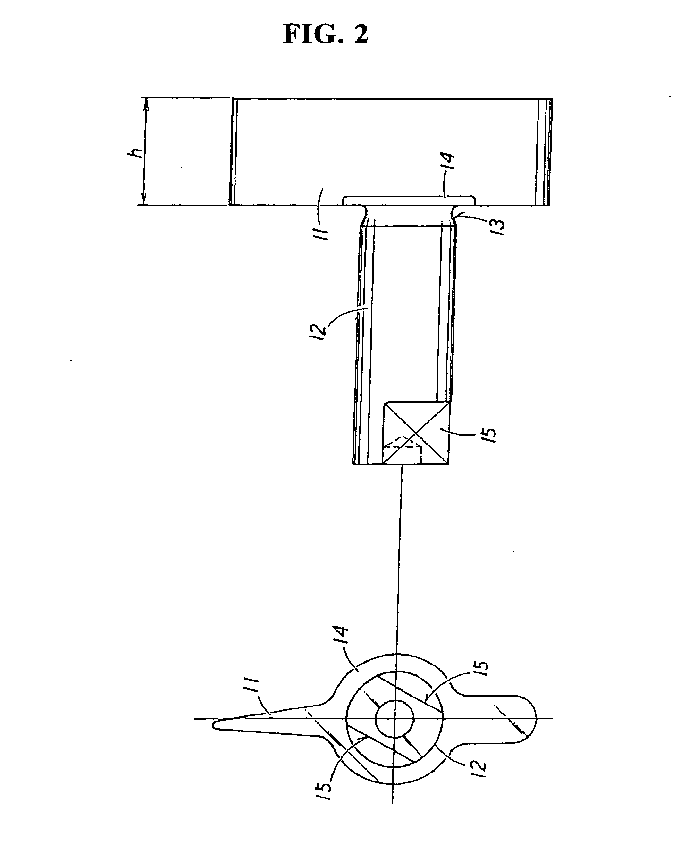

In a portion connecting the blade portion 11 and the shaft portion 12, a taper portion 13 tapering from the shaft portion 12 to the blade portion 11 and a flange portion 14 having a somewhat larger diameter than that of the shaft portion 12 are formed continuously. A bottom face of the flange portion 14 is formed to be almost flush with an end face of the blade portion 11 on the side of the shaft portion 12, to thereby ensure a smooth rotation of the adjustable blade 1 through the bottom face in a state where the adjustable blade 1 is fitted to the turbine frame 2. Furthermore, at a distal end of the shaft portion 12, reference planes 15 serving as a basis for mounting of the adjustable blade 1 is formed. These reference planes 15 are a portion fixed by caulking or the like to the blade adjusting mechanism 3. The reference planes 15, as shown in Figs. 1 and 2 as an example, are formed by cutting out the shaft portion 12 on its opposite sides in a manner to have a substantially constant inclination with respect to the blade portion 11.

Next, the turbine frame 2 will be described. The turbine frame 2 is constructed as a frame member for rotatably holding the plurality of adjustable blades 1. The turbine frame 2, as shown in Fig. 1 as an example, is constructed to sandwich the adjustable blades 1 by a frame segment 21 and a holding member 22 thereof. The frame segment 21 comprises a flange portion 23 for receiving the shaft portions 12 of the adjustable blades 1 and a boss portion 24 for being fitted therearound with the blade adjusting mechanism 3 described later. In such construction, the same number of receiving holes 25 as the number of the adjustable blades 1 are formed on a peripheral portion of the flange portion 23 spaced regularly.

The holding member 22 is formed to have a disk shape having an opening at the center thereof as shown in Fig. 1. In order to always rotate the blade portions 11 of the adjustable blades 1 sandwiched by the frame segment 21 and the holding member 22 smoothly, the dimension between the frame segment 21 and the holding member 22 is maintained at a substantially constant dimension (approximately the dimension of the blade width of the adjustable blade 1) and, as an example, the dimension is maintained by caulking pins 26 provided at four positions on the radially outer side of the receiving holes 25. Correspondingly, pin insertion holes 27 for receiving the respective caulking pins 26 are formed on the frame segment 21 and holding member 22.

In the illustrate embodiment, the flange portion 23 of the frame segment 21 comprises two flange parts, i.e. a flange part 23A having almost the same diameter as that of the holding member 22 and a flange part 23B having a somewhat larger diameter than that of the holding member 22. These flange parts are formed of a single member. However, in the case where it is too complicated to make the flange parts 23A and 23B by processing the same member, the flange parts 23A and 23B may be constructed in such a manner that two flange parts having different diameters are formed separately and then joined to each other by caulking, brazing or the like.

Next, the blade adjusting mechanism 3 will be described. The blade adjusting mechanism 3 is provided on the outer periphery of the boss portion 24 of the turbine frame 2 to rotate the adjustable blades 1 so as to control the flow rate of the exhaust gas. The blade adjusting mechanism 3, as shown in Fig. 1 as an example, comprises a rotating member 31 for substantially causing the rotation of the adjustable blades 1 in the assembly and transmitting members 32 for transmitting the rotation to the adjustable blades 1. As shown in Fig. 1, the rotating member 31 is formed to have an approximate disk shape having an opening at the center thereof and provided on a peripheral portion thereof with the same number of transmitting members 32 as that of the adjustable blades 1 spaced at regular intervals. The transmitting member 32 comprises a driving element 32A rotatably mounted on the rotating member 31 and a driven element 32B fitted fixedly on the reference planes 15 of the adjustable blade 1. In the state where the driving element 32A and the driven element 32B are connected to each other, the rotation is transmitted. More specifically, the driving element 32A having the shape of a rectangular piece is pivotally mounted to the rotating member 31, and the driven element 32B which is formed to be substantially U-shaped to receive the driving element 32A is fixed on the reference planes 15 at the distal end of the adjustable blade 1. The rotating member 31 is attached to the boss portion 24 such that the driving elements 32A having a rectangular piece shape are fitted into the respective U-shaped driven elements 32B, to thereby engage the driving elements 32A and the driven elements 32B with each other.

In the initial state where the plurality of adjustable blades 1 are attached, in order to align them on the circumference, it is necessary that each of the adjustable blades 1 and a respective one of the driven elements 32 B are attached to form a predetermined angle. In the illustrated embodiment, the reference planes 15 of the adjustable blade 1 mainly perform such an alignment function. Furthermore, in the case where the rotating member 31 is simply fitted into the boss portion 24, it is feared that the engagement of the transmitting member 32 is released when the rotating member 31 slightly moves away from the turbine frame 2. Therefore, in order to prevent this, a ring 33 or the like is provided on the side opposite to the turbine frame 2 such that the rotating member 31 is interposed between the ring 33 and the turbine frame 2, to thereby urge the rotating member 31 toward the turbine frame 2.

By such a structure, when the engine is running at low rotational speeds, the rotating member 31 of the blade adjusting mechanism 3 is rotated as necessary, and the rotation is transmitted to the shaft portions 12 through the transmitting members 32, so that the adjustable blades 1 are rotated as shown in Fig. 1 so as to suitably throttle the exhaust gas G, with the result that the flow rate of the exhaust gas is regulated.

The exhaust gas guide assembly A has basically the above described structure. The heat resisting material constituting the assembly will be described for each embodiment.

### [Embodiment 1]

Embodiment 1 is an embodiment corresponding to claims 1-3, in which the presence of nonmetallic matter present in a heat resisting metal member is decreased and the size of nonmetallic matter is reduced. For this purpose, a method or process, such as calcium injection, a heating pressurization treatment, a pure oxygen blowing refining treatment or the like, is applied to the heat resisting metal member. More specifically, the manufacturing procedure is as follows.

### (i) Decrease of Nonmetallic Inclusions in the Heat Resisting Metal Member

Calcium injection during a refining process decreases generation of nonmetallic inclusions, i.e. oxides (type B and type C inclusions) as well as sulfides (type A inclusions) by discharging sulfur, silicon, aluminum and the like as calcium compounds. Furthermore, by a pure oxygen blowing refining treatment, nonmetallic inclusions of type B and type C are decreased by discharging oxides as slag.

### (ii) Reduction of the Size of Nonmetallic Inclusions in the Heat resisting Metal Member

Using a Steckel mill provided with heating furnaces on both of the entrance side and the exit side of a coil or a mighty continuous hot rolling mill capable of a large rolling reduction, nonmetallic inclusion remaining after the refining process are drawn (for type A inclusions) and finely triturated (for type B and type C inclusions). The size of nonmetallic inclusions is reduced by generating a large amount of oxides uniformly through the pure oxygen blowing refining treatment.

### (iii) Manufacture of the Exhaust Gas Guide Assembly

The exhaust gas guide assembly is manufactured by applying a process or processes, such as casting, forging, pressing, precision blanking, boring, caulking, surface modification or the like, to the material which has the above described treatment applied thereto.

### (iv) Durability

Compared to an unprocessed material, high-temperature/thermal fatigue, creep properties, toughness, factor of stress concentration and high-temperature oxidization resistance were all reduced to one fifth and remarkably improved. The high-temperature durability of the exhaust gas guide assembly was increased five times as large as that of one made from the unprocessed material.

### [Embodiment 2]

Embodiment 2 is an embodiment corresponding to claims 4-6, in which the heat resisting member (alloy) is manufactured according to the common procedure. Three examples embodied are shown in Table 1.

The reason for limiting the amount of each component in the alloy is as follows.

C of not more than 0.05% is to reduce sensitization susceptibility.

Mn of not less than 1% is to delay generation of a σ phase.

Ni of not less than 15% is to increase free energy for generating the σ phase.

Cr of not more than 30% is to increase free energy for generating the σ phase.

Ti of not less than 0.1% is to generate a γ' phase.

Al of not less than 0.1% is to generate the γ' phase.

Ce or La of not less than 0.05% is to suppress generation of an phase.

### (i) Manufacture of the Exhaust gas guide Assembly

A basic material is manufactured by executing to it predetermined control of the above ingredients in the purifying process in a converter, thereafter, through the ordinary processes of continuous casting, hot rolling and cold rolling. Using this basic material, the exhaust gas guide assembly is processed and manufactured.

### (ii) Suppression of Textural Embrittlement

Table 1 shows the data of suppression of textural embrittlement.

**Table 1**

| Sample Material | | Component (weight %) | | | | | | | | Textural Embrittlement Resistance Test | |
|---|---|---|---|---|---|---|---|---|---|---|---|
| | | C | Mn | Ni | Cr | Ti | Al | Ce | La | Sensitization Resistance | σ Embrittlement Resistance |
| Steel in Embodiment 2 | ① | 0.01 | 2.0 | 2.5 | 2.0 | 1.5 | 1.5 | - | - | ○ | ○ |
| | ② | 0.05 | 1.5 | 2.5 | 2.0 | - | - | 0.07 | - | Δ | ○ |
| | ③ | 0.05 | 1.5 | 2.5 | 2.0 | - | - | 0.07 | 0.08 | Δ | ○ |
| Comparative Steel (SUS310S) | | 0.06 | 0.5 | 2.0 | 2.5 | - | - | - | - | Δ | × |

### (iii) Coating Method

(a) In order to coat a surface of the alloy in this embodiment, it is preferable to use a TD salt bath treatment. More specifically, coating is carried out according to the following procedure.
After carburizing a surface of a member to a nonequilibrium supersaturated state in advance, the member preheated at 500°C is dipped in a salt bath at about 1000°C including borax, chlorides and chromium oxide, whereby a coating of chromium carbide is generated.
(b) Suppression of Textural Embrittlement
Table 2 shows the data of suppression of textural embrittlement.

**Table 2**

| Sample Material | Textural Embrittlement Resistance Test | |
|---|---|---|
| | Sensitization Resistance | High-Temperature Wear Resistance |
| Without Coating | ○ | × |
| With Coating | ⓞ | ⓞ |

### (iv) Stress Imparting Treatment

(a) Contents of the Treatment
Prior to a precipitation heat treatment, a certain process within an acceptable extent is applied to the member as uniformly as possible, and when necessary, a hydrostatic pressure such as a hydraulic pressure or the like is further applied, whereby a plastic strain is introduced in a state where stress is imparted.
(b) Suppression of Textural Embrittlement Table 3 shows the data of suppression of textural embrittlement.

**Table 3**

| Sample Material | | Overaging Resistance |
|---|---|---|
| A | Ordinary Processing of Member | × |
| B | Uniform Processing of Member | ○ |
| C | B + Hydrostatic Pressure Process | ⓞ |

### [Embodiment 3]

Embodiment 3 is an embodiment corresponding to claims 7 and 8 and the alloy of this embodiment is manufactured according to the common procedure. Three examples embodied are shown in Table 4.

The reason for limiting the amount of each component in the alloy is as follows.

W of not less than 0.3% is to cause tempering secondary hardening to occur effectively and at a high temperature.

V of not less than 1.0% is to cause tempering secondary hardening to occur effectively and at a high temperature.

Mo of not less than 1.0% is to cause tempering secondary hardening to occur effectively and at a high temperature.

Hf of not less than 0.5% is to cause tempering secondary hardening to occur effectively and at a high temperature.

### (i) Manufacture of the Exhaust Gas Guide Assembly

A stainless steel raw material is manufactured by controlling the composition in a refining process in a converter and further improving the accuracy of the composition in a secondary refining process, thereafter, forming a slab, a billet, a bloom or the like in a continuous casting process, and thereafter, by hot rolling and cold rolling. Using the stainless steel raw material, the exhaust gas guide assembly is manufactured by machining and applying a heat treatment.

### (ii) Durability

Table 4 shows the data of improvement of durability.

**Table 4**

| Sample Material | | | Component (Weight %) | | | | | | Durability Test |
|---|---|---|---|---|---|---|---|---|---|
| | | | C | Cr | W | V | Mo | Hf | Hv (Vickers Hardness) Caused by Secondary Hardening at 800°C |
| A | SUS420J2 | | 0.3 | 1.3 | - | - | - | - | 200 |
| B | Steel in Embodiment 3 | ① | 0.5 | 13 | 0.4 | - | - | - | 520 |
| | | ② | 0.5 | 13 | 0.4 | 1.2 | 1.2 | - | 560 |
| | | ③ | 0.5 | 13 | 0.4 | 1.2 | 1.2 | 0.7 | 600 |
| C | B + Processing | ① | 0.5 | 13 | 0.4 | - | - | - | 600 |
| | | ② | 0.5 | 13 | 0.4 | 1.2 | 1.2 | - | 700 |
| | Strain | ③ | 0.5 | 13 | 0.4 | 1.2 | 1.2 | 0.7 | 800 |

### (iii) Coating Method

(a) In order to coat a surface of a martensitic stainless steel in this embodiment, it is preferable to use a chromium carbide coating method by a salt bath treatment. More specifically, coating is carried out according to the following procedure.
Since dissolved carbon is sufficiently contained, after being cleaned, the stainless steel is preheated at 500°C, dipped in a salt bath at about 1000°C including borax, chlorides and chromium oxide, thereafter, taken out from the bath, and then neutralized and cleaned. During these processes, it is preferable to process at a low temperature and for a short time as far as possible to prevent degradation of the state of secondary hardening.
(b) High-Temperature Durability Table 5 shows the data of high-temperature durability improvement.

**Table 5**

| Sample Material | High-Temperature Durability |
|---|---|
| Without Coating | Δ (Occurrence of high-temperature oxidation and seizure) |
| With Coating | ○ (The above phenomena tend not to occur extremely.) |

### [Embodiment 4]

Embodiment 4 is an embodiment corresponding to claims 9 and 10. The heat resisting member (alloy) in this embodiment is manufactured according to the common procedure. Two examples embodied are shown in Table 6.

The reason for limiting the amount of each component in the alloy is as follows.

C of 0.2-0.5% is a suitable range for coating with a necessary and sufficient amount of chromium carbide having a sufficient high-temperature durability.

Mn of 5-10% is to maintain the amount of dissolved carbon in a suitable range of 0.2-0.5%.

Ni of 10-20% is to maintain the amount of dissolved carbon in a suitable range of 0.2-0.5%.

Cr of 15-25% is to maintain the amount of dissolved carbon in a suitable range of 0.2-0.5%.

N of 0.05-0.2% is to maintain the amount of dissolved carbon in a suitable range of 0.2-0.5%.

One or two of La, Ce and Sm is/are set to be 0.01-0.1% to maintain the amount of dissolved carbon in a suitable range of 0.2-0.5% and to contribute to formation of the chromium carbide coating.

### (i) Manufacture of the Exhaust Gas Guide Assembly

The heat-resistance material is manufactured by controlling the composition in a refining process in a converter and further improving the accuracy of the composition in a secondary refining process, thereafter, forming a slab, a billet, a bloom or the like in a continuous casting process, and thereafter, by hot rolling and cold rolling. Using the heat-resistance material, the exhaust gas guide assembly is manufactured by machining and applying a heat treatment.

### (ii) High-Temperature Strength

The data of high-temperature strength improvement are shown in Table 6.

**Table 6**

| Sample Material | | Component (Weight %) | | | | | | | | High-Temperature Strength |
|---|---|---|---|---|---|---|---|---|---|---|
| | | C | Nm | Ni | Cr | N | La | Ce | Sm | Tensile Strength at 800°C (MPa) |
| A | Steel in Embodiment 4 | 0.3 | 5.5 | 19 | 24 | 0.10 | 0.07 | - | - | 220 |
| B | | 0.4 | 6.0 | 19 | 24 | 0.10 | - | 0.05 | 0.02 | 230 |
| C | Comparative Material (SUS310S) | 0.06 | 0.5 | 20 | 25 | 0.02 - | | - | - | 170 |

### (iii) Coating Method

(a) In order to coat a surface of the alloy in this embodiment, it is preferable to use a salt bath treatment. More specifically, coating is carried out according to the following procedure.
After an assembly component has been cleaned, the assembly component is preheated at 500°C, then, dipped in a salt bath prepared by adding, chlorides and chromium oxide in borax, at about 1000°C, thereafter, taken out from the bath, and then neutralized and cleaned.
(b) Durability Table 7 shows the data of improvement of durability.

**Table 7**

| Sample Material | | Component (Weight %) | | | | | | | | Durability |
|---|---|---|---|---|---|---|---|---|---|---|
| | | C | Nm | Ni | Cr | N | La | Ce | Sm | Coefficient of Friction at 850°C |
| A | Steel in Embodiment 4 | 0.3 | 5.5 | 19 | 24 | 0.10 | 0.07 | - | - | 0.5 |
| B | | 0.4 | 6.0 | 19 | 24 | 0.10 | - | 0.05 | 0.02 | 0.4 |
| C | Comparative Material (SUS310S) | 0.06 | 0.5 | 20 | 25 | 0.02 | - | - | - | 1.8 |

### [Embodiment 5]

Embodiment 5 is an embodiment corresponding to claims 11 and 12. The heat resisting member (alloy) is produced by adding carbon to an SUS310S type stainless steel according to the JIS. More specifically, the heat resisting member is produced according to the following procedure. The examples embodied are shown in Table 8 presented later.

The heat-resistance member is manufactured by controlling the composition in a refining process in a converter and further improving the accuracy of the composition in a secondary refining process, and thereafter, forming a slab in a continuous casting machine. Thereafter, slab heating is carried out at 1200°C or above and for one hour or more for soaking, hot rolling with a small initial rolling reduction is performed in a Steckel mill or the like, then hot rolling is carried out while controlling the lower limit temperature for rolling at 950°C or more, and finally, quenching with a large amount of cooling water is performed. The hot rolled coil thus obtained is subjected to cold rolling and annealing at approximately 1100°C in a continuous equipment to avoid generation of carbide of substrate iron, with the result that a raw material for the product is obtained.

The carbon content is set to be 0.15-0.35% because carbon is dissolved by the processes of this embodiment and the carbon content is limited to a range in which chromium carbide can be coated without carburization.

### (i) Manufacture of the Exhaust Gas Guide Assembly Member

The heat-resistance member is manufactured by controlling the composition in a refining process in a converter and heating a slab formed by continuous casting to a high-temperature of 1250°C or above, and thereafter, by rolling/forging and quenching.

### (ii) Improvement of Strength

The data of high-temperature hardness are shown in Table 8.

**Table 8**

| Sample Material | Carbon Content | High-Temperature Hardness (Hv [Vickers Hardness] at 800°C) | Wear (Seizure) | Coefficient of Friction |
|---|---|---|---|---|
| Steel in | 0.32 | 510 | None | 0.4 |
| Embodiment 5 | | | | |
| SUS310S | 0.05 | 290 | Occurred | 1.8 |

### (iii) Coating Method

(a) Coating a surface of the alloy in this embodiment is carried out using carbon that is mostly dissociated and dissolved in the heat resisting material. More specifically, coating is carried out according to the following procedure.
   After the member has been cleaned, the member is preheated at 500°C, then, dipped in a salt bath containing chromium oxide/titanium/tungsten or the like, and thereafter, neutralization is carried out.
(b) High-Temperature Wearing
   The data related to the high-temperature hardness and high-temperature wearing are shown in the above Table 8.

### [Embodiment 6]

Embodiment 6 is an embodiment corresponding to claims 13 and 14.

### (i) Manufacture of the Exhaust gas guide Assembly

Adjusting and melting components for the various superalloys having predetermined compositions are carried out in a vacuum refining process, and an ingot of a superalloy (Inconel 713C etc.) for casting is produced. The assembly component is manufactured from the ingot as a master alloy for sand-mold casting and precision casting. On the other hand, a superalloy (Incoloy 800H etc.) for rolling/forging is produced in the form of an ingot or, when necessary, in the form of a slab, a bloom or a billet by continuous forging, and thereafter, it is subjected to rolling/forging and finished as a superalloy material. Thereafter, machining (and a heat treatment) is applied to the superalloy material to finish as the assembly component.

### (ii) High-Temperature Strength

The data of high-temperature hardness are shown in Table 9.

**Table 9**

| Sample Material | High-Temperature Strength (Tensile Strength, MPa:800°C) |
|---|---|
| Incoloy 800H | 500 |
| Inconel 713C | 600 |
| Hasteloy S | 550 |

### (iii) Coating Method

(a) Coating a surface of the superalloy in this embodiment with chromium carbide, titanium carbide, tungsten carbide, vanadium carbide, niobium carbide or molybdenum carbide is carried out after carburizing or nitriding has been performed in advance. More specifically, coating is carried out according to the following procedure.
After ionization carburizing or ionization nitriding, the superalloy raw material is preheated at 500°C and dipped in a salt bath containing chromium, titanium, tungsten, vanadium, niobium or molybdenum, and thereafter neutralization is carried out.
(b) Suppression of Degradation by Wearing Due to High-Temperature Sliding Table 10 shows the data of suppression of degradation by wearing.

**Table 10**

| Sample Material | Coating | Suppression of Degradation by Wearing (Coefficient of Friction at 900°C) |
|---|---|---|
| Incoloy 800H | None | 1.5 |
| Incoloy 800H | Cr-C | 0.5 |
| Incoloy 800H | Ti-C | 0.4 |
| Incoloy 800H | W-C | 0.4 |
| Incoloy 800H | Mo-C | 0.5 |
| Incoloy 800H | V-C | 0.5 |
| Incoloy 800H | Nb-C | 0.5 |

### [Embodiment 7]

Embodiment 7 is an embodiment corresponding to claim 15 and the shaped material of this heat resisting member (alloy) is manufactured basically by the precision casting method or a metal injection molding method (see Tables 11 and 12 presented later).

The material for the product is manufactured by controlling the composition in a refining process in a converter and further improving the accuracy of the composition in a secondary refining process, and thereafter, forming a slab in a continuous casting machine. Thereafter, slab heating is carried out at 1200°C or above and for one hour or more for soaking, hot rolling with a small initial rolling reduction is performed in a Steckel mill or the like, then hot rolling is carried out while controlling the lower limit temperature for rolling at 950°C or more, and finally, quenching with a large amount of cooling water is performed. The hot rolled coil thus obtained is subjected to cold rolling and annealing at approximately 1100°C in a continuous equipment to avoid generation of carbide of substrate iron, with the result that a raw material for the product is obtained.

The reason for limiting the amount of each component in the alloy cast steel is as follows.

C of 0.2-0.5% is to facilitate improvement of fluidity, high-temperature strength and coating processability.

Cr of 15-30% is to improve heat resistance.

Ni of 15-30% is to especially facilitate improvement of high-temperature strength, high-temperature oxidation resistance, heat fatigue and thermal expansion (change of dimensions).

Pb of 0.01-0.1% is to facilitate carrying out machining of a near-net-shape part formed by a precision casting process or a MIM process and to improve MIM sintering properties.

Se of 0.01-0.1% is to facilitate carrying out machining of a near-net-shape part formed by a precision casting process or a MIM process and to improve MIM sintering properties.

Te of 0.01-0.1% is to facilitate carrying out machining of a near-net-shape part formed by a precision casting process or a MIM process and to improve MIM sintering properties.

O of 0.02-0.1% is to improve the fluidity during precision casting.

S of 0.005-0.05% is to improve the fluidity during precision casting.

### (i) Manufacture of the Exhaust Gas Guide Assembly

### (a) Precision Casting Process

### 1. Manufacture

The shaped material is manufactured by a lost-wax process which is a typical precision casting method, taking into consideration the above combination of components. According to this process, a coating layer of a refractory material is formed around a pattern of wax having the same shape as the product to be cast, and thereafter, the coating layer and the pattern is collectively heated to melt off only the pattern of wax. More specifically, the shaped material is manufactured according to the following procedure and a measure for increasing the level of a near-net shape is taken.

The composition of the components is controlled using an Fe-Ni-Cr based master alloy in an electric furnace and the viscosity of a molten metal is decreased by a high-temperature melting preparation, followed by rapid-cooling pouring the molten metal into the mold unless any crack by thermal stresses occurs in the refractory mold, whereby the dimensional tolerance is minimized, i.e., dimensional accuracy is improved. Then, after cooled down, the mold is disassembled and runners and the like are cut and the material is pickled and/or cleaned, resulting in a near-net-shape product being obtained. Thereafter, the product is completed as the assembly component through a light cutting process. In this embodiment, new findings are incorporated so as to minimize load imposed on the post-processes, such as cutting, polishing and the like.

### 2. Data on Manufacture

Fig. 11 shows the data of comparison with a conventional product.

**Table 11**

| Sample Material | Components (Weight %) | | | | | | | | Fluidity | Dimensional Accuracy | Machinability |
|---|---|---|---|---|---|---|---|---|---|---|---|
| | C | Cr | Ni | Pb | Se | Te O S | | | | | |
| Steel in Embodiment 7 | 0.40 | 20 | 24 | 0.04 | 0.03 | 0.02 | 0.09 | 0.020 | good | Improved | Possible to cut at one time |
| Conventional Product | 0.06 | 20 | 24 | - | - | - | 0.05 | 0.007 | Not good in terms of flowing into portions having small radius of curvature and occurrence of cavities | - | Two or three times of cutting are necessary |

### (b) Metal Injection Molding Process

### 1. Manufacture

Fine raw material powder is prepared by increasing the discharge velocity of air/water for atomizing and the cooling rate and by controlling the shape and the size of a nozzle, and oxides on the particle surfaces of the powder are removed by a reducing atmosphere. Then, the powder is sintered at a temperature immediately below the melting point (approximately -20°C) to form closed cells and is subjected to an injection molding process to obtain a near-net-shape product. Then, an assembly component is obtained through a light cutting process.

### 2. Data on the Product

Table 12 shows the data of comparison with a conventional product.

**Table 12**

| Sample Material | Components (Weight %) | | | | | | | | Formation of Closed Cells | High-Tempera -ture Bending Fatigue | Machinability |
|---|---|---|---|---|---|---|---|---|---|---|---|
| | C | Cr | Ni | Pb | Se | Te | O | S | | | |
| Steel in Embodiment 7 | 0.40 | 20 | 24 | 0.04 | 0.03 | 0.02 | 0.09 | 0.020 | Almost 100% | Both the fatigue and the strength are improved by 50-100% | possible to cut at one time |
| Conventional Product | 0.06 | 20 | 24 | - | - | - | 0.05 | 0.007 | About 50% | - | Two or three times of cutting are necessary |

### (iii) Durability

The above product formed by the lost-wax process or the MIM process and machining is subjected to a salt bath treatment (and carburizing when necessary) in order to form a carbide coating.

Table 13 shows the data on improvement of durability.

**Table 13**

| High-Temperature Coefficient of Friction with/without Coating | | | |
|---|---|---|---|
| Sample Material | | | Durability(Coefficient of Friction at 850°C) |
| Manufacturing Method | | With/Without Coating | |
| A | Lost-Wax | with coating | 0.4 |
| B | | without coating | 1.8 |
| C | MIM | with coating | 0.5 |
| D | | without coating | 1.9 |

### [Embodiment 8]

Embodiment 8 is an embodiment corresponding to claims 16-20.

### (i) High-Alloy Austenitic Heat Resisting Stainless Steel

### (a) Example Having Only Ion Carburizing and a TD Salt Bath Treatment Applied thereto

A glow discharge is generated in a rare gas atmosphere of 2-3 Torr containing hydrocarbon gases including, such as methane and propane and the generated hydrocarbon-based plasma ions are applied to a surface of an object to be processed and the surface is carburized. Then, the object to be processed is dipped in a high-temperature TD salt bath in which oxide of Cr, V, Ti, W or the like and chlorides as assistants are mixed into borax, so that a coating of carbide is formed in a high-temperature chemical reaction.

### (b) Example in which SUS310S or SUH310 Is Used

The example is basically similar to the case in the above-described method. However, since there is a difference in carbon content between SUS310S and SUH310, i.e. C<0.1% for SUS310S and C 0.2% for SUH310, suitable conditions must be selected for ion carburizing. As a result of the TD salt bath treatment, high-temperature durability including mainly the high-temperature wear properties and high-temperature oxidation is remarkably improved. Furthermore, since finer grains can be obtained by addition of Ti, Nb, B, Hf or the like, high-temperature hardness, fatigue properties, creep properties and the like are improved. The above item (a) is further applied.

### (c) Example in which SCH21 Is Used

Since the example is basically similar to the above-described method and the carbon content is rather high as C 0.3%, the time for ion carburizing may be short. The effects obtained by the TD salt bath treatment and the finer grains are the same as those of SUS310S and SUH310. The above item (a) is further applied.

### (d) Example in which Rolled Material Is Used

The material is preheated and then pressed with a small rolling reduction in the austenite region to be transformed into the ferrite region, and thereafter the material is rolled with a large rolling reduction quickly to significantly increase the number of nuclei for recrystallization. Then, the phase transition from austenite to ferrite is avoided by a cooling process (in the ordinary hot rolling, a phase transition after pressing occurs and ferrite recrystallization occurs from austenite grains), whereby fine grains are obtained. Therefore, heat resistance such as high-temperature strength or the like is improved. The above item (a) is further applied.

### (ii) Example in which Iron-Based Superalloys Are Used

Since iron-based superalloys such as SUH660 and Incoloy 800H not only contain much Ni but also have Ti, Al or the like added thereto, it is necessary to further pay attention to cleaning and activation of the surface when ion carburizing is applied thereto. The rest of the conditions are the same as in the item (a) basically.

### (iii) Example in which Nickel-Based Superalloys Are Used

### (a) Example in which Only Ion Carburizing and a Salt Bath Treatment Are Applied

Since Ni-based superalloys such Inconel 718 and Inconel 7130 contain Ni as a matrix, the level of vacuum is set at the minimum and the glow discharge voltage is set at a somewhat high voltage when ion carburizing is carried out. When the salt bath treatment is performed, a bath balancing chloride (for shifting the bath balance of a reducing agent and oxides to a high-concentration side relative to a boric acid medium) is added, taking into consideration the diffusion velocity of dissolved carbon in the Ni matrix.

### (b) Example in which a γ' Phase Is Precipitated

For the high-temperature use of γ precipitation type Ni-based superalloys (including SUH660) that includes a γ' phase of such as Ni₃Ti, Ni₃Al or the like, it is necessary to disperse the γ' phases finely and uniformly as much as possible. For this purpose, strains are introduced before a precipitation treatment and/or a precipitation heat treatment is performed by applying a polygonizing process (two-stage heat treatment).

The heat resisting raw material for constituting the exhaust gas guide assembly A is manufactured and formed as described above. The manufacturing method of the shaped material having a starting form for the adjustable blade 1, previously mentioned a little in the embodiment 7, will be described.

The shaped material for the adjustable blade 1 is a metal raw material which is integrally provided with the blade portion 11 and the shaft portion 12 in a state before completion and the aimed adjustable blade 1 is formed by applying a rolling process, a polishing process or the like to the shaped material as necessary. As a raw material for the shaped material, a metal raw material having heat resistance such as, for example, SUS310S or the like is applied. Here, the shaped material is obtained by the precision casting process or the metal injection molding process. The precision casting process and the metal injection molding process will be described in Embodiment 9 and Embodiment 10, respectively.

### [Embodiment 9]

Embodiment 9 is an embodiment corresponding to claim 21-24. This approach can generally realize a cast product (shaped material) having a high accuracy and the lost-wax process is applied by way of example here. According to the lost-wax process, a wax pattern having the same shape as the product to be cast is first formed, and then a coating layer of a refractory material is formed around the wax pattern. The wax pattern and the coating layer are collectively heated to melt only the wax pattern, whereby the mold (or coated layer) is manufactured. With this approach, a mold having exactly the same shape as the aimed product can be obtained and a cast product is produced with a high accuracy.

The precision casting method includes a Shaw process, a CADIC process and the like in addition to the lost-wax process, and these processes are applicable. For example, the Shaw process is a process in which a green mold is formed by kneading a mixture of an alkyl-silicate binder additive in the liquid form and a granular refractory material, and then the green mold is quickly dried such that cracks are formed by drying to be hair cracks invisibly fine, with the result that the deformation of the whole mold caused by shrinking is prevented.

According to such a precision casting process, a mold is formed to have almost the same shape and size as the aimed product (or adjustable blade 1) and a cast product (or shaped material) having exactly the same shape and size as the aimed product can be reproduced with a high accuracy. However, even according to such a precision casting process, there are disadvantages that it is difficult to obtain the shaped material having a near-net shape without applying any additional process, and the accuracy of dimensions of the shaped material which has been cast is not sufficient and deviated in order to obtain the adjustable blade 1 having the aimed shape and accuracy. Furthermore, in the case where a post-process such as rolling or the like is applied to the shaped material thereafter, there is a disadvantage that sharp edges tend to be formed. Therefore, in this embodiment, the following technical measurements are applied as necessary when the casting process is proposed.

First, in order to improve the fluidity of a molten metal to be poured into the mold, a virgin material having a heat resisting metal as a main basic material is used and the amounts of C (carbon), Si (silicon) and O (oxygen) contained in the virgin material are optimized. More specifically, a raw material (virgin material) produced from iron sand, iron ore or the like by direct reduction without undergoing a scrapping process is used, and the amounts of C, Si and O contents are adjusted to be 0.05-0.5%, 0.5-1.5% and 0.01-0.1% (all in weight %), respectively, so that the fluidity of the molten metal and the accuracy of the shape and the dimensions of the shaped material are improved, and rolling formability is also enhanced. In adjusting each of the element contents, the adjustment is carried out while the variation of the analyzed amounts thereof in an electric furnace is monitored.

Furthermore, in casting, one or both of the mold and the shaped material are rapidly cooled such that the necessary time taken until the mold is broken can be shortened and the solidification structure of the shaped material can be made fine-grained. More specifically, cooling water is sprayed on the mold before and after casting by way of example, so that the necessary time taken until the mold is broken can be reduced to, for example, one hour or less (in the ordinary case of cooling by air, it takes one to four hours). In this case, only the mold is cooled in the pre-cooling before casting, and both of the mold and the shaped material are cooled in the cooling after casting. Of course, rapid cooling is carried out within the extent that the mold does not have any cracks caused by thermal stress. When cooling is not necessary both before and after the casting, only one of them may be applied and, when the cooling effect is desired to be improved more, it is possible to spray cooling water to the shaped material taken out from the mold in addition to the cooling both before and after casting.

With such a technical measurement (rapid cooling), the solidification structure of the shaped material can be formed to have finer grains of 50-100 µm, for example (solidified grains having a size of about 100-500 µm in the ordinary air-cooling), and in a process applied later such as rolling, sharp edges will hardly occur due to a distortion strain averaging effect, resulting in a process such as rolling or the like being readily performed.

Furthermore, one or more of one or more of Pb (lead), Se (selenium) and Te (tellurium) are added to the molten metal to be poured into the mold, and somewhat large quantities of O (oxygen) and S (sulfur) are contained in the molten metal unless the presence of nonmetallic inclusions will cause a problem. More specifically, 0.01-0.1% of Pb, 0.01-0.1% of Se and 0.01-0.1% of Te (all in weight %) are contained and the contents of O and S are set to be 0.02-0.1% and 0.005-0.5% (all in weight %), respectively. The reason why Pb, Se, Te or the like is added is to improve the rolling formability and machinability (mainly, grinding property) of the shaped material. The reason why O, S and the like are added is to enhance the fluidity. With regard to the fluidity, it has been confirmed by the applicants that the viscous flowability of the Stokes flow was improved by at least 20-40%.

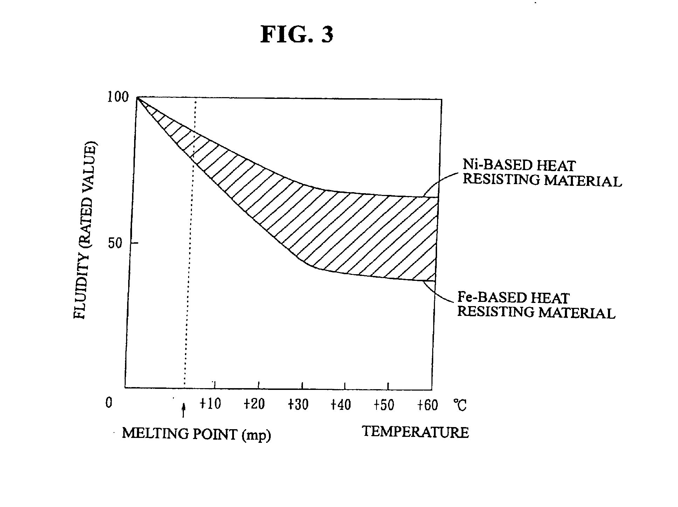

In casting, the molten metal is poured into the mold in a state where the molten metal is heated to a temperature higher than the melting point thereof and the viscosity thereof is lower than that at the melting point. Fig. 3 shows the relation between the temperature (represented by a heating state relative to the melting point) and the viscosity, taking the example of Ni (nickel)-based heat resisting material and Fe (iron)-based heat resisting material. The fluidity (the rated value) shown in Fig. 3 denotes the flowability of the molten metal to be poured and corresponds to the viscosity. It can be seen from Fig. 3 that the viscosity of the molten metal has high dependence on temperature around the melting point thereof and the viscosity thereof is decreased as the temperature of the raw material becomes higher. However, it can be seen that, in a region where the temperature is elevated by approximately 30 C relative to the melting point, the temperature dependence of the viscosity is weakened and the viscosity is not decreased so much even when the temperature is further raised. Therefore, in this embodiment, taking into consideration the effect of the decrease of the viscosity and the cost necessary for further raising the temperature, as an example, the raw material is poured into the mold in a state where the temperature thereof is raised further by approximately 30 C from its melting point.

### [Embodiment 10]

Embodiment 10 is an embodiment of a metal injection molding process corresponding to claim 25-27. This approach is substantially the same as a common injection molding process of synthetic resin (plastics) conventionally known. For example, metal powder (material) such as, iron, titanium and the like and a binder (an additive for coupling mainly metal powder particles such as, a mixture of polyethylene resin, wax and phthalic acid ester) are kneaded so as to impart plasticity to the metal powder. Then, the material having plasticity thus imparted is injected into a mold and solidified into a desired shape, and then the binder is removed. Thereafter, a shaped material having a desired shape is obtained by sintering.

As described above, similarly to the precision casting process, a molded product (shaped material) having almost exactly the same shape and size as the aimed product (or an adjustable blade 1) can be obtained by metal injection molding. However, on the other hand, there are problems that the shaped material formed has a higher porosity as compared to that of solid materials, and that especially, in heat resisting high-alloy materials, the bulk density is not sufficient and high-temperature bending fatigue property is not satisfactory. The porosity represents a kind of cavities (a cluster of a large number of point defects, these clusters being further coupled with each other to result in formation of fine cracks) in the crystalline in a metal material or the like. The metal material is adversely effected when the porosity becomes too high. In view of these facts, in this embodiment, the following technical measurements are applied as necessary to the metal injection molding process.

First, in order to generate closed cells (spheroidal spaces between metal particles) as fine and uniformly as possible, sintering is carried out taking a long period of time. More specifically, for example, when SUS310S having the melting point of 1500 C is used, sintering is carried out at 1300 C taking a relatively long period of time of approximately two hours.

By carrying out sintering as described above, the porosity of the shaped material is decreased, so that the bulk density can be increased. The shaped material injection-molded is further subjected to a HIP (Hot Isostatic Pressing) treatment, whereby the bulk density is further enhanced. More specifically, a pressure of approximately 100 MPa (1000 atmospheres) is applied isotropically to the shaped material while the shaped material is heated at 1300°C.

It has been confirmed by the applicants that, by carrying out the above sintering and the HIP process, the size of the closed cells that was approximately 100 µm before sintering became approximately 10 µm after sintering and the bulk density was increased by approximately 5%. Due to the bulk density thus increased, improvement of the strength of the shaped material can be achieved as well as the dimensional accuracy can be improved, so that a shaped material having a more complete near-net shape can be obtained.

When the metal powder, for example, a precipitation-hardening-type heat resisting material such as SUH660 or the like is sintered, generation and growth of γ' (called "gamma prime" and denotes an intermetallic compound of Ni₃(Al, Ti)) are suppressed by rapid heating, to thereby be made fine-grained. This is to suppress the overaging phenomenon under a high-temperature environment. In this case, the rapid heating is desirably induction heating in which a heating current is generated by electromagnetic induction.

In this embodiment, a technical measurement which makes the metal powder for injection molding sphere-shaped and fine and improves fatigue characteristics of the shaped material formed under high-temperature rotatory bending is concurrently applied. In making the metal powder sphere-shaped and fine, a so-called air atomizing process or water atomizing process is applied, in which, for example, the molten metal is blown out from a nozzle, and a high-speed fluid such as air or water is applied to the molten metal such that the metal is divided into a large number of liquid drops by the impact of the high-speed fluid, and thereafter, the metal is cooled and solidified, whereby the metal powder is obtained. In such an atomizing process, metal powder having metal particles of a desired size can be obtained by changing as necessary the shape and the diameter of the nozzle for blowing out the molten metal, the discharge velocity of the air or water applied to the molten metal, the cooling rate or the like. It has been confirmed by the applicants that, when metal powder of SUS310S was made to have fine particles such as approximately 200 µm in size and sintered, the fatigue property under high-temperature rotatory bending was improved by approximately 20%.

Furthermore, when the metal injection mold process is applied, reducing of the surface of the metal material before sintering is executed by flowing a gas along and contacting with the surfaces of the metal particles, which gas forms a reducing atmosphere and which gas includes such as ammonium, carbon monoxide or the like. This can remove oxides on the surfaces of the metal particles, to thereby improve the sintering property as well as enhance the effect of the hot isostatic pressing to contribute significantly to the reduction of the porosity.

According to the present invention, it is possible to improve the heat resistances such as high-temperature strength, oxidation resistance, high-temperature wear resistance of the exhaust gas guide assembly A while suppressing the cost low. More specifically, it is possible to improve high-temperature durability by causing the nonmetallic inclusions to decrease and be small-dimensioned (see Embodiment 1), or adding rare-earth elements (see Embodiment 2). Furthermore, it may also be possible to add W (tungsten), V (vanadium), Mo (molybdenum), Hf (hafnium)or the like to a relatively cheap martensitic stainless steel such as SUS410, SUS440 or the like (see Embodiment 3). Furthermore, the crystalline grains can be made fine and high-temperature strength can be improved by applying rolling with a large rolling reduction in the ferrite region to a material such as a rolled product of a high-alloy austenitic heat resisting stainless steel or iron-based superalloy (see Embodiment 8). Furthermore, maintenance of high-temperature strength and suppression of wear degradation due to sliding at high temperatures can be enhanced by forming a coating of chromium carbide, titanium carbide, tungsten carbide, vanadium carbide, niobium carbide, molybdenum carbide or the like on a surface of a raw material such as an iron-based superalloy or nickel-based superalloy, such as Incoloy 800H, Inconel 713C or the like (see Embodiment 6).

Furthermore, according to the present invention, it is possible to suppress the high-temperature degradation of the exhaust gas guide assembly A accompanying the use in a high-temperature atmosphere. More specifically, a stress imparting process is applied in advance to a heat resisting raw material of precipitation-hardening-type such as SUH660 or the like, so that overaging can be suppressed by preventing growth of a γ' phase (gamma prime) that precipitates during the use under a high-temperature atmosphere (for example, 700-800°C) and making it fine and uniform (see Embodiment 2). Furthermore, it is possible to prevent the sensitization which tends to occur at, for example, a use temperature of approximately 600-800 C by reducing the carbon content of a raw material used, and concurrently, by making the material fine-grained. Furthermore, it is possible to prevent the σ embrittlement that tends to occur at, for example, a use temperature of approximately 850 C by reducing Cr to be contained in the raw material while increasing Si (silicon) and Mn (manganese).

Furthermore, according to the present invention, it is possible to form a carbide coating without carburizing by expanding the solubility limit of dissolved carbon of the raw material used at a high temperature (see Embodiment 4) or by causing the raw material to contain much carbon by dissociating the carbides using high-temperature slab heating after the raw material has been melted and refined (see Embodiment 5).

Furthermore, it is possible to improve the fluidity during the precision casting process by adding Se (selenium), Te (tellurium), O (oxygen), S (sulfur) or the like to a Cr-based or Ni-Cr-based heat resisting material, and it is possible to obtain a shaped material having a high dimensional accuracy and a high strength by making closed cells generated during the metal injection mold process, fine (see Embodiments 7, 9 and 10).

### INDUSTRIAL APPLICABILITY

As set forth hereinabove, the present invention is suitable for improving high-temperature wear property, oxidation resistance, high-temperature hardness or the like of a member constituting an exhaust gas guide assembly for a VGS turbocharger. Furthermore, the present invention is suitable for forming a shaped material (starting form) having a near-net shape for an adjustable blade that is a constituent member of an exhaust gas guide assembly.

## Claims

1. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting metal member constituting the exhaust gas guide assembly (A) has a cleanliness level which is set to be not more than 0.1% in the area ratio of nonmetallic inclusions.

2. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting metal member constituting the exhaust gas guide assembly (A) has nonmetallic inclusions of which the size is set to be not greater than 10 µm, wherein the size for type A inclusions is defined as a width/length thereof in a direction perpendicular to a rolling direction and the size for type B or type C inclusions is defined as a diameter thereof.

3. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting metal member constituting the exhaust gas guide assembly (A) has a cleanliness level which is set to be not more than 0.1% in the area ratio of nonmetallic inclusions; and
the size of the nonmetallic inclusions is set to be not greater than 10 µm, wherein the size for type A inclusions is defined as a width/length thereof in a direction perpendicular to a rolling direction and the size for type B or type C inclusions is defined as a diameter thereof.

4. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting member constituting the exhaust gas guide assembly (A) comprises an alloy containing, in addition to iron, carbon of a predetermined weight percent, other alloying elements of a predetermined weight percent and incidental impurities; and
the weight percentages of carbon and the other alloying elements are set to be not more than 0.05% for C, not less than 1% for Mn, not less than 15% for Ni, not more than 30% for Cr, and not less than 0.1% for Ti, respectively, and the other alloying elements include one or more alloying elements selected from the group consisting of Al, Ce and La, the weight percentages thereof being set to be not less than 0.1% for Al, not less than 0.05% for Ce and not less than 0.05% for La, respectively.

5. An exhaust gas guide assembly (A), with an improved heat resistance, for a VGS turbocharger as defined in claim 4, **characterized in that**:
the heat resisting member constituting the exhaust gas guide assembly (A) is formed on a surface thereof with a coating of chromium carbide.

6. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting member of a γ' precipitation hardening type which constitutes the exhaust gas guide assembly (A) has a stress imparting treatment applied thereto in advance.

7. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting member constituting the exhaust gas guide assembly (A) comprises a martensitic stainless steel which contains at least one component selected from the group consisting of W of not less than 0.3%, V of not less than 1.0%, Mo of not less than 1.0% and Hf of not less than 0.5% by weight.

8. An exhaust gas guide assembly (A), with an improved heat resistance, for a VGS turbocharger as defined in claim 7, **characterized in that**:
the heat resisting member constituting the exhaust gas guide assembly (A) is formed on a surface thereof with a coating of chromium carbide.

9. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting member constituting the exhaust gas guide assembly (A) comprises an alloy containing, in addition to iron, carbon of a predetermined weight percent, other alloying elements of a predetermined weight percent and incidental impurities; and
the weight percentages of carbon and the other alloying elements are set to be 0.2-0.5% for C, 5.0-10% for Mn, 10-20% for Ni, 15-25% for Cr, 0.05-0.2% for N and 0.01-0.1% for one or two alloying elements selected from the group consisting of La, Ce and Sm, respectively, to thereby increase the solubility limit of carbon at a high temperature.

10. An exhaust gas guide assembly (A), with an improved heat resistance, for a VGS turbocharger as defined in claim 9, **characterized in that**:
the heat resisting member constituting the exhaust gas guide assembly (A) is formed on a surface thereof with a coating of chromium carbide.

11. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting member constituting the exhaust gas guide assembly (A) comprises an alloy containing, in addition to iron, carbon of a predetermined weight percent, other alloying elements of a predetermined weight percent and incidental impurities; and
the weight percentages of carbon and the other alloying elements are set to be 0.15-0.35% for C, not more than 1.5% for Si, not more than 2.0% for Mn, not more than 0.45% for P, not more than 0.03% for S, 19.0-22.0% for Ni and 24.0-26.0% for Cr, respectively, wherein after melting and refining, followed by high-temperature slab heating, a quenching treatment after rolling/forging is carried out so that chromium carbide and cementite are dissociated and dissolved to thereby enrich carbon.

12. An exhaust gas guide assembly (A), with an improved heat resistance, for a VGS turbocharger as defined in claim 11, **characterized in that**:
the heat resisting member constituting the exhaust gas guide assembly (A) is formed on a surface thereof with a coating of chromium carbide, titanium carbide, tungsten carbide or the like without carrying out a carburization treatment which is essential for a non-casting type heat resisting steel.

13. An exhaust gas guide assembly (A), with an improved heat resistance, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a superalloy is applied to a heat resisting member constituting the exhaust gas guide assembly (A).

14. An exhaust gas guide assembly (A), with an improved heat resistance, for a VGS turbocharger as defined in claim 13, **characterized in that**:
the heat resisting member constituting the exhaust gas guide assembly (A) is formed on a surface thereof with a coating of chromium carbide, titanium carbide, tungsten carbide, vanadium carbide, niobium carbide or molybdenum carbide.

15. An exhaust gas guide assembly (A), with an improved durability, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting member constituting the exhaust gas guide assembly (A) comprises an alloy containing, in addition to iron, carbon of a predetermined weight percent and other alloying elements of a predetermined weight percent; and
the weight percentages of carbon and the other alloying elements are set to be 0.2-0.5% for C, 15-30% for Cr, 15-30% for Ni, 0.01-0.1% for Pb, 0.01-0.1% for Se, 0.01-0.1% for Te, 0.02-0.1% for O and 0.005-0.05% for S, respectively, to thereby contain a comparatively large amount of chromium and nickel.

16. A method for manufacturing a heat resisting member applicable to an exhaust gas guide assembly (A) for a VGS turbocharger, which assembly comprises:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
an adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
the method comprises the steps of:
subjecting a material selected from the group consisting of high-alloy austenitic heat resisting stainless steel, iron based superalloy and nickel based superalloy to ion carburizing; and
subsequently, carrying out a TD salt bath treatment.

17. A method for manufacturing a heat resisting member applicable to an exhaust gas guide assembly for a VGS turbocharger as defined in claim 16, **characterized in that**:
in a case where the high-alloy austenitic heat resisting stainless steel is selected as the material, an amount of carbon contained in the material is set to be the lower limit within the specifications and one or more of Ti, Nb, B, Hf and Zr are contained in the material.

18. A method for manufacturing a heat resisting member applicable to an exhaust gas guide assembly for a VGS turbocharger as defined in claim 16, **characterized in that**:
in a case where the iron based superalloy is selected as the material, one or more of Ti, Nb, B, Hf and Zr are contained in the material.

19. A method for manufacturing a heat resisting member applicable to an exhaust gas guide assembly for a VGS turbocharger as defined in claim 16, **characterized in that**:
in a case where a rolled product of the high-alloy austenitic heat resisting stainless steel or the iron based superalloy is selected as the material, the material is subjected to hot-rolling with a large rolling reduction in the ferrite region to become fine-grained.

20. A method for manufacturing a heat resisting member applicable to an exhaust gas guide assembly for a VGS turbocharger as defined in claim 16, **characterized in that**:
in a case where the nickel based superalloy is selected as the material, a lot of internal strains are accumulated under high stress within the allowable range, to thereby precipitate a fine-grained γ' phase while the internal strains are serving as nuclei.

21. A method for manufacturing a shaped material for an adjustable blade applicable to an exhaust gas guide assembly (A) for a VGS turbocharger,
the adjustable blade (1) including a shaft portion (12) serving as a center of rotation and a blade portion (11) for substantially adjusting the flow rate of exhaust gas (G), the adjustable blade (1) being incorporated in the VGS turbocharger,
wherein flow of the exhaust gas (G) at a low flow rate discharged from an engine is suitably throttled to increase the velocity of the exhaust gas (G) so that an exhaust turbine wheel (T) is rotated by energy of the exhaust gas (G) and a compressor directly coupled to the exhaust turbine wheel (T) feeds more air into the engine than fed into it by natural suction, whereby a high output power is obtained at low rotational speeds, **characterized in that**:
in manufacturing an adjustable blade (1), a step of obtaining a shaped material which is integrally provided with a blade portion (11) and a shaft portion (12) as a starting form for the adjustable blade (1) is conducted by precision casting which enables the shaped material to be formed with high accuracy; and
in casting, a virgin material including a heat resisting steel or alloy as a primary parent metal is utilized, the virgin material containing, in weight percentage, 0.05-0.5% C, 0.5-1.5% Si and 0.01-0.1% O, whereby fluidity of a molten metal which is poured into a mold is enhanced.

22. A method for manufacturing a shaped material for an adjustable blade applicable to an exhaust gas guide assembly for a VGS turbocharger as defined in claim 21, **characterized in that**:
in the casting, one of the mold and the shaped material or both are cooled so that the period of time between pouring of the molten metal into the mold and breaking the mold is shortened, resulting in a solidification structure of the shaped material being fine-grained.

23. A method for manufacturing a shaped material for an adjustable blade applicable to an exhaust gas guide assembly for a VGS turbocharger as defined in claim 21 or 22, **characterized in that**:
in the casting, one or more of Pb, Se and Te are added to the molten metal to be poured into the mold, and somewhat large quantities of O and S are contained in the molten metal unless the presence of nonmetallic inclusions will cause a problem.

24. A method for manufacturing a shaped material for an adjustable blade applicable to an exhaust gas guide assembly for a VGS turbocharger as defined in claim 21, 22 or 23, **characterized in that**:
in the casting, the temperature of the molten metal to be poured into the mold is elevated to a temperature higher than the melting point thereof so that the molten metal is poured into the mold in a state where the viscosity of the molten metal is lower than that at the melting point.

25. A method for manufacturing a shaped material for an adjustable blade applicable to an exhaust gas guide assembly for a VGS turbocharger,
the adjustable blade (1) including a shaft portion (12) serving as a center of rotation and a blade portion (11) for substantially adjusting the flow rate of exhaust gas (G), the adjustable blade (1) being incorporated in the VGS turbocharger,
wherein flow of the exhaust gas (G) at a low flow rate discharged from an engine is suitably throttled to increase the velocity of the exhaust gas (G) so that an exhaust turbine (T) is rotated by energy of the exhaust gas (G) and a compressor directly coupled to the exhaust turbine wheel (T) feeds more air into the engine than fed into it by natural suction, whereby a high output power is obtained at low rotational speeds, **characterized in that**:
in manufacturing an adjustable blade (1), a step of obtaining a shaped material including a blade portion (11) and a shaft portion (12) as a starting form for the adjustable blade (1) is conducted by metal injection molding in which a metal powder having plasticity imparted thereto is injected into a mold and solidified;
in the injection molding, sintering is carried out so as to uniformly form minute closed cells which are spheroidal pores between metal grains; and
thereafter, the shaped material thus injection molded is subjected to a hot isostatic press treatment (HIP treatment) so as to increase the density of the shaped material.

26. A method for manufacturing a shaped material for an adjustable blade applicable to an exhaust gas guide assembly for a VGS turbocharger as defined in claim 25, **characterized in that**:
in the metal injection molding, particles of the metal powder which is a raw material are formed to have a spherical shape and to be fine so that fatigue characteristics of the shaped material under high temperature rotatory bending are enhanced.

27. A method for manufacturing a shaped material for an adjustable blade applicable to an exhaust gas guide assembly (A) for a VGS turbocharger as defined in claim 25 or 26, **characterized in that**:
in the metal injection molding, surfaces of particles of the metal powder which is a raw material are reduced before sintering.
